# NEUE EUROPÄISCHE PATENTSCHRIFT

(11) **EP 3 361 086 B2**
(45) Veröffentlichungstag und Bekanntmachung des Hinweises auf die Entscheidung über den Einspruch: **08.02.2023**
(45) Hinweis auf die Patenterteilung: 11.09.2019
(21) Anmeldenummer: 18159505.9
(22) Anmeldetag: 17.07.2013
(51) Int. Cl.: F02M 55/02, F02M 55/04, F16L 3/10

(54) **HALTER ZUR BEFESTIGUNG EINES ROHRFÖRMIGEN BAUTEILS AN EINER ANBAUSTRUKTUR**
HOLDER FOR FIXING A TUBULAR ELEMENT ON A MOUNTED STRUCTURE
SUPPORT DE FIXATION D'UN COMPOSANT TUBULAIRE À UNE STRUCTURE ANNEXE

(30) Priorität: 13.09.2012 DE 102012216236
(43) Veröffentlichungstag der Anmeldung: 15.08.2018
(62) Teilanmeldung aus: 13739660.2
(73) Patentinhaber: Robert Bosch GmbH, 70442 Stuttgart (DE)
(72) Erfinder: Rehwald, Andreas, 74321 Bietigheim-Bissingen (DE)

(56) Entgegenhaltungen:
- WO-A1-2006/011031
- DE-A1- 3 708 864
- DE-A1-102005 047 352
- DE-B3-102007 020 498
- DE-B4-102005 025 360
- DE-T2- 69 401 402
- DE-U1- 8 335 824
- DE-U1- 9 003 030
- US-A- 2 355 742
- US-A- 5 098 047
- US-A- 5 261 633
- US-A1- 2009 140 106
- US-B2- 7 591 246

## Beschreibung

### Stand der Technik

Die Erfindung betrifft eine Brennstoffeinspritzanlage mit einem Halter zur Befestigung eines rohrförmigen Bauteils, insbesondere eines Verteilerrohrs eines Brennstoffverteilers, an einer Anbaustruktur. Speziell betrifft die Erfindung das Gebiet der Brennstoffeinspritzanlagen von Brennkraftmaschinen.

Aus der US 7,591,246 B2 ist ein schwingungsisoliertes Brennstoffverteilungssystem für eine Brennkraftmaschine bekannt. In einer möglichen, bekannten Ausgestaltung sind ein erstes und ein zweites Halteteil vorgesehen. Um ein rohrförmiges Verteilerrohr ist ein ringförmiges Isolationsteil gelegt, das im montierten Zustand zwischen Aufnahmen der Halteelemente angeordnet ist, wobei über das Isolationselement die Halteelemente das Verteilerrohr halten, wobei ein Kontakt zwischen dem Verteilerrohr und den Halteelementen verhindert ist. Die Befestigung erfolgt mit einem Befestigungsmittel, das sich durch die Halteelemente erstreckt und am Zylinderkopf fixiert ist.

Die aus der US 7,591,246 B2 bekannte Ausgestaltung zum Befestigen des Verteilerrohrs an dem Zylinderkopf der Brennkraftmaschine hat den Nachteil, dass bei der Montage eine Vielzahl von Einzelteilen geeignet an dem Verteilerrohr positioniert und dann in geeigneter Position fixiert werden muss. Außerdem werden die Halteelemente direkt mit einer großen Befestigungskraft beaufschlagt. Beim Festziehen des Befestigungsmittels kann es außerdem über den Schraubenkopf vermittelt zu einer Relativbewegung zwischen den Halteelementen kommen, die eine Quetschung des Isolierelements bedingt.

### Offenbarung der Erfindung

Die erfindungsgemäße Brennstoffeinspritzanlage mit den Merkmalen des Anspruchs 1 hat den Vorteil, dass ein verbesserter Aufbau ermöglicht ist. Speziell kann eine Montage vereinfacht werden.

In vorteilhafter Weise können die erste Halbschale und die zweite Halbschale geometrisch zumindest näherungsweise gleich ausgestaltet sein. Dadurch bilden diese gewissermaßen ein Bauteil, was die Handhabung und die Montage vereinfacht. Allerdings ist auch eine unsymmetrische Ausgestaltung möglich. Die verbundenen Halbschalen können nämlich dann um das Verteilerrohr geklappt und über eine Schraube fixiert oder über eine Schnappkontur zusammen geclipst werden. Es ist eine Ausführung in getrennter Halbschalenbauweise vorgesehen. Bei einer getrennten Ausgestaltung ist beispielsweise eine Montage über zwei Schrauben möglich. Auch eine Fügung über Clipsverbindungen ist denkbar. Ferner ist auch eine Kombination aus einer Schraub- und einer Clipsverbindung möglich. Auch andere Verbindungsmöglichkeiten können zum Einsatz kommen.

Die elastisch verformbaren Dämpfungselemente, die in den Haltebereich der ersten Halbschale eingelegt sind, sind streifen- oder lippenförmig ausgestaltet und die elastisch verformbaren Dämpfungselemente, die-in den Haltebereich der zweiten Halbschale eingelegt sind, sind streifen- oder lippenförmig ausgestaltet.

Durch die in den Unteransprüchen aufgeführten Maßnahmen sind vorteilhafte Weiterbildungen der im Anspruch 1 angegebenen Brennstoffeinspritzanlage möglich.

Das rohrförmige Bauteil, insbesondere das Verteilerrohr des Brennstoffverteilers, sowie die Anbaustruktur sind keine Bestandteile des Halters. Insbesondere kann der Halter auch unabhängig von einem rohrförmigen Bauteil oder einer Anbaustruktur hergestellt und vertrieben werden. Entsprechend ist die Anbaustruktur kein Bestandteil der erfindungsgemäßen Brennstoffeinspritzanlage. Die Brennstoffeinspritzanlage kann unabhängig von solch einer Anbaustruktur, insbesondere einem Zylinderkopf einer Brennkraftmaschine, hergestellt und vertrieben werden.

Durch den Halter kann eine kostengünstige Lösung zur Befestigung des Verteilerrohrs und somit des Brennstoffverteilers an beispielsweise einem Zylinderkopf der Zylindermaschine erfolgen. Hierbei ist eine Vormontage des Halters auf das Verteilerrohr möglich. Damit kann die Brennstoffeinspritzanlage einschließlich aller Anbauteile mit einem oder mehreren Haltern und Schrauben im Motorenwerk eingesetzt und verschraubt werden. Hierbei kann die genaue Positionierung der Brennstoffeinspritzventile in ihren Aufnahmebohrungen ermöglicht werden.

Bei der Ausgestaltung des Dämpfungselements aus speziellen Materialien ist das Einlegen des Dämpfungselements vorteilhaft Bei einer Ausgestaltung des Dämpfungselements aus einem Elastomer ist ein Einlegen in die Halbschale möglich. Speziell können mehrere Dämpfungselemente in Form von Gummistreifen in die jeweilige Halbschale eingelegt werden.

Durch die Ausgestaltung der Dämpfungselemente aus viskoelastischen Elastomereinlagen kann eine sehr gut wirksame Geräuschentkopplung erzielt werden, wodurch die Übertragung in die Anbaustruktur sehr stark reduziert ist. Auf das Verteilerrohr wirkende Lasten können durch Elastomervolumina gut aufgenommen werden. Über die Variation von Fläche und Volumen kann die Steifigkeit der Verbindung optimal an die Belastungen angepasst werden. Die bei einem starr verschraubten System auftretenden thermischen Spannungen werden durch die Elastomerlagerung vermieden, wodurch das Verteilerrohr weniger belastet wird und leichter gebaut werden kann. Der Einsatz der vorzugsweise aus Kunststoff bestehenden Halbschalen erfolgt vorzugsweise in Verbindung mit einer festen Anbindung der Brennstoffeinspritzventile an das Verteilerrohr. Hierbei sind vorzugsweise mehrere Halter zur Befestigung eines Verteilerrohrs vorgesehen.

Außerdem ist es vorteilhaft, dass eine metallische Hülse in der ersten Halbschale angeordnet und umspritzt ist und dass eine metallische Hülse in der zweiten Halbschale angeordnet und umspritzt ist. Für die Durchführung der Schraube können somit als metallische Einleger in den Halbschalen dienende metallische Hülsen eingesetzt werden, die umspritzt sind.

Möglich ist auch eine Ausführung mit zwei Schrauben je Halter zur Befestigung des rohrförmigen Bauteils auf dem Zylinderkopf oder einer anderen Anbaustruktur. Diese Anordnung ermöglicht in Bezug auf den jeweiligen Anwendungsfall eine bessere Verteilung der Lasten auf zwei Schrauben. Somit ist es vorteilhaft, dass eine weitere metallische Hülse in der ersten Halbschale angeordnet und umspritzt ist, dass die metallische Hülse und die weitere metallische Hülse der ersten Halbschale bezüglich des elastischen Dämpfungselements gegenüberliegend zueinander angeordnet sind, dass eine weitere metallische Hülse in der zweiten Halbschale angeordnet und umspritzt ist und dass die metallische Hülse und die weitere metallische Hülse der zweiten Halbschale bezüglich des elastischen Dämpfungselements gegenüberliegend zueinander angeordnet sind.

Durch nur formende Fertigungsverfahren besteht außerdem die Möglichkeit, dass die Halterstruktur den zur Verfügung stehenden Bauraum optimal nutzt beziehungsweise ausfüllt. Durch die Formgebung im Spritzgussverfahren kann die Ausgestaltung der Halbschalen so erfolgen, dass die Formsteifigkeit der auftretenden Belastung angepasst ist. Dies ist insbesondere durch Versteifungen möglich. Speziell können Versteifungsrippen vorgesehen sein, die zu einer Minderung der Bauteilspannungen führen.

Die erste Halbschale und die zweite Halbschale sind hierbei in vorteilhafter Weise mittels eines Filmscharniers miteinander verbunden.

### Kurze Beschreibung der Zeichnungen

Die Figuren zeigen Beispiele, bei denen die Dämpfungselemente angespritzt und nicht eingelegt sind. Daher sind die in den Figuren gezeigten Beispiele nicht zur Erfindung gehörig. Es zeigen:
Fig. 1 eine Brennstoffeinspritzanlage mit einem Verteilerrohr und mehreren Haltern, die zum Befestigen des Verteilerrohrs an einer Anbaustruktur dienen, in einer schematischen, räumlichen Darstellung, die nicht unter den Umfang des geschützten Gegenstands fällt;
Fig. 2 eine auszugsweise, räumliche Darstellung der in Fig. 1 gezeigten Brennstoffeinspritzanlage entsprechend einem ersten Beispiel, das nicht unter den Umfang des geschützten Gegenstands fällt, während der Montage;
Fig. 3 eine Halbschale des in Fig. 2 dargestellten Halters in einer räumlichen Darstellung entsprechend einem zweiten Beispiel, das nicht unter den Umfang des geschützten Gegenstands fällt und
Fig. 4 die in Fig. 2 auszugsweise dargestellte Brennstoffeinspritzanlage entsprechend einem dritten Beispiel, das nicht unter den Umfang des geschützten Gegenstands fällt.

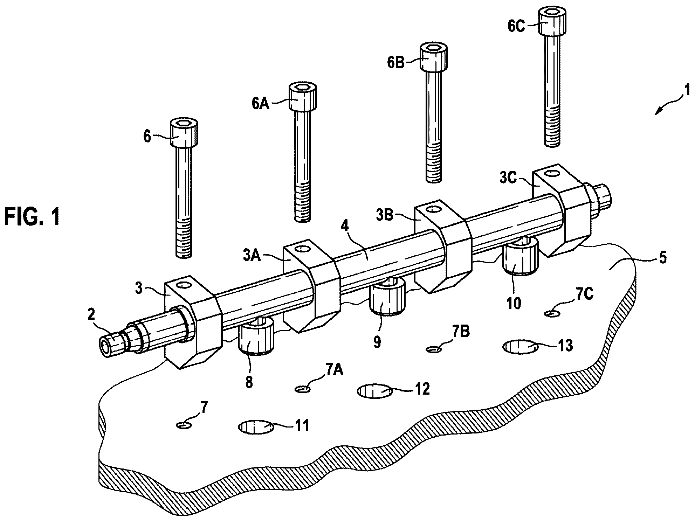

Fig. 1 zeigt eine Brennstoffeinspritzanlage 1 mit einem Brennstoffverteiler 2 und mehreren Haltern 3, 3A, 3B, 3C, die zum Befestigen eines Verteilerrohrs 4 des Brennstoffverteilers 2 an einer schematisch dargestellten Anbaustruktur 5 dienen, in einer schematischen, räumlichen Darstellung. Der Halter 3 umfasst hierbei eine Schraube 6, mittels der der Halter 3 an der Anbaustruktur 5 anschraubbar ist. Entsprechend sind weitere Schrauben 6A, 6B, 6C der Halter 3A, 3B, 3C vorgesehen. Die Anbaustruktur 5 weist hierfür geeignete Gewindebohrungen 7, 7A, 7B, 7C auf. An dem Verteilerrohr 4 sind drei Tassen 8, 9, 10 angebracht, die zum Anschließen von nicht dargestellten Brennstoffeinspritzventilen dienen. Solche Brennstoffeinspritzventile sind teilweise in Bohrungen 11, 12, 13 der Anbaustruktur 5 einfügbar. In diesem Fall handelt es sich bei der Anbaustruktur 5 um einen Zylinderkopf 5 einer Brennkraftmaschine. Es sind allerdings auch andere Ausgestaltungen denkbar, so dass die Anbaustruktur 5 nicht auf einen Zylinderkopf beziehungsweise auf eine Brennkraftmaschine beschränkt ist. Ferner können Brennstoffeinspritzventile auch auf andere Weise als über die dargestellten Tassen 8, 9, 10 mit dem Verteilerrohr 4 verbunden werden. Ferner kann auch ein weiteres Verteilerrohr an der gleichen Brennkraftmaschine angebracht werden. Hierdurch kann beispielsweise eine Ausgestaltung der Brennstoffeinspritzanlage 1 für einen Motor mit sechs Zylindern erzielt werden.

Somit kann der Brennstoffverteiler 2 zuverlässig mittels der Halter 3, 3A, 3B, 3C an der Anbaustruktur 5 befestigt werden. Die Anzahl der Halter 3, 3A, 3B, 3C kann hierbei in Bezug auf den jeweiligen Anwendungsfall geeignet gewählt werden. Im Folgenden ist die Ausgestaltung des Halters 3 in weiterem Detail erläutert. Je nach Anwendungsfall können hierbei mehrere solcher Halter 3 zum Einsatz kommen. Hierbei können baugleiche Halter 3 oder auch unterschiedliche Halter 3 zum Einsatz kommen. Ferner eignen sich solche Halter 3 auch zur Befestigung anderer rohrförmiger Bauteile an einer geeigneten Anbaustruktur 5.

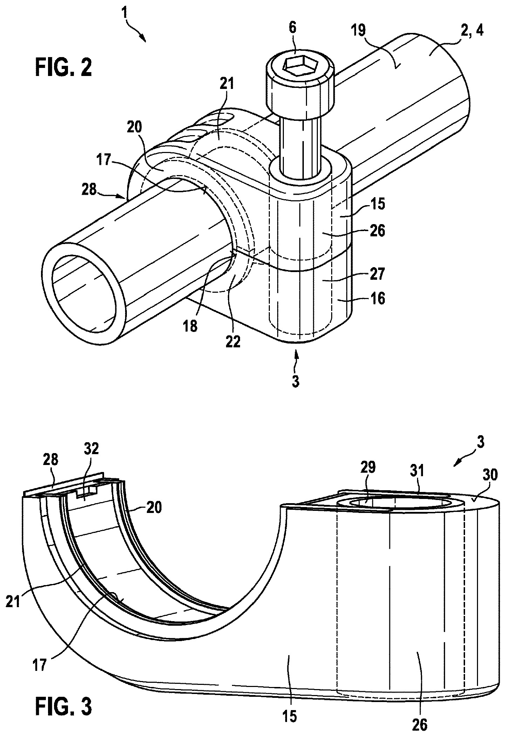

Fig. 2 zeigt eine auszugsweise, räumliche Darstellung der in Fig. 1 gezeigten Brennstoffeinspritzanlage 1 entsprechend einem ersten nicht zur Erfindung gehörigen Beispiel während der Montage. Der Halter 3 weist eine erste Halbschale 15 und eine zweite Halbschale 16 auf. Die erste Halbschale 15 weist einen Haltebereich 17 auf. Die zweite Halbschale 16 weist einen Haltebereich 18 auf. Die Halbschalen 15, 16 umschließen mit ihren Haltebereichen 17, 18 eine Außenseite 19 des Verteilerrohrs 4. Hierbei besteht allerdings kein direkter Kontakt zwischen den Halbschalen 15, 16 und dem Verteilerrohr 4.

An den Haltebereich 17 der ersten Halbschale 15 sind elastisch verformbare Dämpfungselemente 20, 21 im Unterschied zur Erfindung gespritzt. Die erste Halbschale 15 wirkt dadurch im montierten Zustand über die Dämpfungselemente 20, 21 auf die Außenseite 19 des Verteilerrohrs 4 ein. Entsprechend sind an den Haltebereich 18 der zweiten Halbschale 16 ein Dämpfungselement 22 und ein nicht dargestelltes weiteres Dämpfungselement gefügt. Über diese Dämpfungselemente 22 wirkt die zweite Halbschale 16 auf die Außenseite 19 des Verteilerrohrs 4 ein, wenn der Halter 3 montiert ist.

Die Dämpfungselemente 20, 22 sind jeweils teilringförmig ausgestaltet und ergänzen sich im montierten Zustand zu einem Ring, der die Außenseite 19 des Verteilerrohrs 4 umschließt. Entsprechend ergänzen sich auch das Dämpfungselement 21 und das weitere, nicht dargestellte Dämpfungselement zu einem Ring.

Die Schraube 6 befindet sich in einer Vormontageposition, die in der Fig. 2 veranschaulicht ist. Die Positionierung der Schraube 6 in der Vormontageposition erfolgt durch einen Haltesteg der ersten Halbschale 15 oder durch eine Anspritzung aus dem Werkstoff der Dämpfungselemente 20, 21.

Ferner weisen die Halbschalen 15, 16 jeweils eine metallische Hülse 26, 27 auf, die in den Halbschalen 15, 16 angeordnet und umspritzt sind. Durch die metallischen Hülsen 26, 27 ist die Stabilität der Befestigung weiter verbessert. Durch Einschrauben der Schraube 6 werden die Halbschalen 15, 16 gegeneinander beaufschlagt und mit der Anbaustruktur 5 verbunden.

In diesem Beispiel sind die erste Halbschale 15 und die zweite Halbschale 16 geometrisch gleich ausgestaltet. Hierbei können die Halbschalen 15, 16 als separate Teile ausgestaltet sein. Die Halbschalen 15, 16 sind allerdings vorzugsweise über ein Filmscharnier 28 miteinander verbunden.

Fig. 3 zeigt eine Halbschale 15 des in Fig. 2 dargestellten Halters 3 in einer räumlichen Darstellung entsprechend einem zweiten nicht zur Erfindung gehörigen Beispiel. Die Ausgestaltung ist hierbei anhand der Halbschale 15 beschrieben. Die Halbschale 16 kann entsprechend ausgestaltet sein. Beispielsweise kann eine Anspritzung 29 an einer Innenseite 30 der Halbschale 15 aus dem Werkstoff der Dämpfungselemente 20, 21 realisiert werden. Auch die Ausgestaltung eines Haltestegs 31 an der Halbschale 15 ist möglich. Durch die Anspritzung 29 oder den Haltesteg 31 ist eine Schraubensicherung für die Vormontage möglich.

In diesem Beispiel sind die Dämpfungselemente 20, 21 jeweils mit mehreren Lippen ausgestaltet. Somit sind die elastisch verformbaren Dämpfungselemente 20, 21, die an den Haltebereich 17 der Halbschale 15 angespritzt sind, teilringförmig und lippenförmig ausgestaltet. In diesem Beispiel sind die Dämpfungselemente 20, 21 ferner über eine flächige Anspritzung 32 aus dem Werkstoff der Dämpfungselemente 20, 21 miteinander verbunden.

In der Fig. 3 ist eine Ausgestaltung des Filmscharniers 28 an der Halbschale 15 veranschaulicht. Über das Filmscharnier 28 können die Halbschalen 15, 16 miteinander verbunden sein.

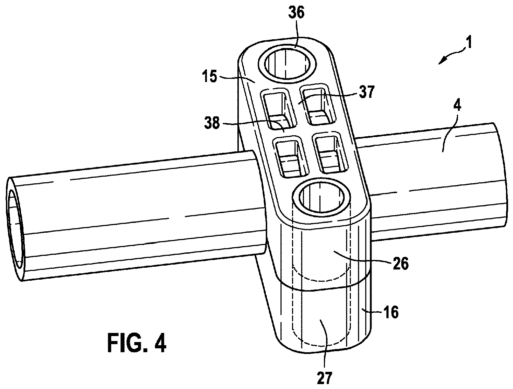

Fig. 4 zeigt die in Fig. 2 auszugsweise dargestellte Brennstoffeinspritzanlage 1 in einer räumlichen Darstellung entsprechend einem dritten nicht zur Erfindung gehörigen Beispiel. In diesem Beispiel weist die erste Halbschale 15 die metallische Hülse 26 und eine weitere metallische Hülse 36 auf. Entsprechend weist die zweite Halbschale 16 eine weitere metallische Hülse auf, die in der Fig. 4 nicht dargestellt ist. Die weitere metallische Hülse 36 der ersten Halbschale 15 und die weitere metallische Hülse der zweiten Halbschale 16 sind hierbei jeweils von dem Werkstoff der Halbschalen 15, 16 umspritzt. Die metallische Hülse 26 und die weitere metallische Hülse 36 der ersten Halbschale 15 sind bezüglich des zumindest einen elastischen Dämpfungselements 20, 21 gegenüberliegend zueinander angeordnet. Im montierten Zustand bedeutet dies, dass die metallische Hülse 26 und die weitere metallische Hülse 36 bezüglich des gehaltenen Verteilerrohrs 4 gegenüberliegend zueinander angeordnet sind. Entsprechend sind die metallische Hülse 27 und die nicht dargestellte weitere metallische Hülse der zweiten Halbschale 16 bezüglich des zumindest einen elastischen Dämpfungselements 22 beziehungsweise des Verteilerrohrs 4 gegenüberliegend zueinander angeordnet. Die Montage erfolgt mit zwei Schrauben. Von diesen Schrauben greift zumindest eine in die Anbaustruktur 5 ein. Somit ergibt sich eine verbesserte Verteilung der Lasten.

Die Halbschale 15 kann außerdem Versteifungsrippen 37, 38 aufweisen, die zu einer Minderung der Bauteilspannungen führen. Somit kann durch die Formgebung im Spritzgussverfahren die Halbschale 15 so ausgebildet beziehungsweise versteift werden, dass die Formsteifigkeit den auftretenden Belastungen angepasst ist. Entsprechend kann die zweite Halbschale 16 ausgestaltet werden.

## Patentansprüche

1. Brennstoffeinspritzanlage (1) mit einem Brennstoffverteiler (2), der ein Verteilerrohr (4) aufweist, und zumindest einem Halter (3), der zum Befestigen des Brennstoffverteilers (2) an einer Anbaustruktur (5) mit zumindest einem elastisch verformbaren Dämpfungselement (20, 21, 22) dient,
wobei eine erste Halbschale (15) und eine zweite Halbschale (16) vorgesehen sind,
wobei die erste Halbschale (15) und die zweite Halbschale (16) zum Befestigen des rohrförmigen Bauteils (4) an der Anbaustruktur (5) so aneinander fügbar sind, dass die erste Halbschale (15) und die zweite Halbschale (16) das rohrförmige Bauteil (4) umschließen und das rohrförmige Bauteil (4) mittels der elastischen Dämpfungselemente (20, 22) halten,
**dadurch gekennzeichnet,**
**dass** in den Haltebereich (17) der ersten Halbschale (15) mehrere elastisch verformbare Dämpfungselemente (20, 21) eingelegt sind und
**dass** in den Haltebereich (18) der zweiten Halbschale (16) mehrere elastisch verformbare Dämpfungselemente (22) eingelegt sind,
wobei die elastisch verformbaren Dämpfungselemente (20, 21), die in den Haltebereich (17) der ersten Halbschale (15) eingelegt sind, streifen- oder lippenförmig ausgestaltet sind und wobei die elastisch verformbaren Dämpfungselemente (22), die in den Haltebereich (18) der zweiten Halbschale (16) eingelegt sind, streifen- oder lippenförmig ausgestaltet sind, wobei die Dämpfungselemente (20, 21, 22) jeweils teilringförmig ausgestaltet sind und sich im montierten Zustand jeweils zu einem Ring ergänzen, der eine Außenseite (19) des Verteilerrohrs (4) umschließt.

2. Brennstoffeinspritzanlage nach Anspruch 1,
**dadurch gekennzeichnet,**
**dass** die erste Halbschale (15) und die zweite Halbschale (16) geometrisch zumindest näherungsweise gleich ausgestaltet sind.

3. Brennstoffeinspritzanlage nach Anspruch 1 oder 2,
**dadurch gekennzeichnet,**
**dass** eine metallische Hülse (26) in der Bohrung der ersten Halbschale (15) angeordnet und umspritzt ist und dass eine metallische Hülse (27) in der Bohrung der zweiten Halbschale (16) angeordnet und umspritzt ist.

4. Brennstoffeinspritzanlage nach Anspruch 3,
**dadurch gekennzeichnet,**
**dass** die Schraube (6) derart vorgesehen ist, dass diese in der metallischen Hülse (26) der ersten Halbschale (15) durch einen Haltesteg (31) der ersten Halbschale (15) oder durch eine Anspritzung (29) aus dem Werkstoff des Dämpfungselements (20) in einer Vormontageposition positionierbar ist.

5. Brennstoffeinspritzanlage nach einem der Ansprüche 1 bis 4,
**dadurch gekennzeichnet,**
**dass** eine weitere metallische Hülse (36) in der ersten Halbschale (15) angeordnet und umspritzt ist, dass die metallische Hülse (26) und die weitere metallische Hülse (36) der ersten Halbschale (15) bezüglich des elastischen Dämpfungselements (20) gegenüberliegend zueinander angeordnet sind, dass eine weitere metallische Hülse in der zweiten Halbschale (16) angeordnet und umspritzt ist und dass die metallische Hülse (27) und die weitere metallische Hülse der zweiten Halbschale (16) bezüglich des elastischen Dämpfungselements (22) gegenüberliegend zueinander angeordnet sind.

6. Brennstoffeinspritzanlage nach einem der vorhergehenden Ansprüche,
**dadurch gekennzeichnet,**
**dass** die erste Halbschale (15) und die zweite Halbschale (16) mittels eines Filmscharniers (28) miteinander verbunden sind.

## Claims

1. Fuel injection system (1) with a fuel distributor (2) which has a distributor tube (4), and with at least one holder (3) which serves for fastening the fuel distributor (2) to a mounted structure (5) with at least one elastically deformable damping element (20, 21, 22), wherein a first half shell (15) and a second half shell (16) are provided,
wherein, for fastening the tubular component (4) to the mounted structure (5), the first half shell (15) and the second half shell (16) can be joined to each other in such a manner that the first half shell (15) and the second half shell (16) surround the tubular component (4) and hold the tubular component (4) by means of the elastic damping elements (20, 22),
**characterized**
**in that** a plurality of elastically deformable damping elements (20, 21) are placed into the holding region (17) of the first half shell (15), and in that a plurality of elastically deformable damping elements (22) are placed into the holding region (18) of the second half shell (16),
wherein the elastically deformable damping elements (20, 21) which are placed into the holding region (17) of the first half shell (15) are configured in a strip-shaped or lip-shaped manner, and wherein the elastically deformable damping elements (22) which are placed into the holding region (18) of the second half shell (16) are configured in a strip-shaped or lip-shaped manner, wherein the damping elements (20, 21, 22) are each of partially annular configuration and, in the mounted state, in each case complement one another to form a ring which surrounds an outer side (19) of the distributor tube (4).

2. Fuel injection system according to Claim 1, **characterized in that** the first half shell (15) and the second half shell (16) are of geometrically at least approximately identical configuration.

3. Fuel injection system according to Claim 1 or 2, **characterized in that** a metallic sleeve (26) is arranged and insert-moulded in the bore of the first half shell (15), and **in that** a metallic sleeve (27) is arranged and insert-moulded in the bore of the second half shell (16).

4. Fuel injection system according to Claim 3, **characterized in that** the screw (6) is provided in such a manner that said screw can be positioned in a pre-assembly position in the metallic sleeve (26) of the first half shell (15) by a holding web (31) of the first half shell (15) or by an injection moulding extension (29) from the material of the damping element (20).

5. Fuel injection system according to one of Claims 1 to 4, **characterized in that** a further metallic sleeve (36) is arranged and insert-moulded in the first half shell (15), **in that** the metallic sleeve (26) and the further metallic sleeve (36) of the first half shell (15) are arranged lying opposite each other with respect to the elastic damping element (20), **in that** a further metallic sleeve is arranged and insert-moulded in the second half shell (16), and **in that** the metallic sleeve (27) and the further metallic sleeve of the second half shell (16) are arranged lying opposite each other with respect to the elastic damping element (22).

6. Fuel injection system according to one of the preceding claims, **characterized in that** the first half shell (15) and the second half shell (16) are connected to each other by means of a film hinge (28).

## Revendications

1. Installation d'injection de carburant (1) comprenant un distributeur de carburant (2) qui présente un tube distributeur (4), et au moins un support (3) qui sert à fixer le distributeur de carburant (2) à une structure de montage (5) avec au moins un élément d'amortissement élastiquement déformable (20, 21, 22), une première demi-coque (15) et une deuxième demi-coque (16) étant prévues,
la première demi-coque (15) et la deuxième demi-coque (16) pouvant être jointes l'une à l'autre pour fixer le composant tubulaire (4) à la structure de montage (5) de telle sorte que la première demi-coque (15) et la deuxième demi-coque (16) entourent le composant tubulaire (4) et supportent le composant tubulaire (4) au moyen des éléments d'amortissement élastiques (20, 22), **caractérisée**
**en ce que** plusieurs éléments d'amortissement élastiquement déformables (20, 21) sont insérés dans la zone de support (17) de la première demi-coque (15) et en ce que plusieurs éléments d'amortissement élastiquement déformables (22) sont insérés dans la zone de support (18) de la deuxième demi-coque (16),
les éléments d'amortissement élastiquement déformables (20, 21) qui sont insérés dans la zone de support (17) de la première demi-coque (15) étant conçus en forme de bande ou de lèvre et les éléments d'amortissement élastiquement déformables (22) qui sont insérés dans la zone de support (18) de la deuxième demi-coque (16) étant conçus en forme de bande ou de lèvre, les éléments d'amortissement (20, 21, 22) étant chacun conçus en forme d'anneau partiel et se complétant chacun à l'état monté en un anneau qui entoure un côté extérieur (19) du tube distributeur (4).

2. Installation d'injection de carburant selon la revendication 1, **caractérisée en ce que** la première demi-coque (15) et la deuxième demi-coque (16) sont conçues géométriquement sous forme au moins approximativement identique.

3. Installation d'injection de carburant selon la revendication 1 ou 2, **caractérisée en ce qu'**une enveloppe métallique (26) est agencée et surmoulée dans l'alésage de la première demi-coque (15), et **en ce qu'**une enveloppe métallique (27) est agencée et surmoulée dans l'alésage de la deuxième demi-coque (16).

4. Installation d'injection de carburant selon la revendication 3, **caractérisée en ce que** la vis (6) est prévue de telle sorte que celle-ci peut être positionnée dans l'enveloppe métallique (26) de la première demi-coque (15) dans une position de prémontage par une entretoise de support (31) de la première demi-coque (15) ou par une injection (29) du matériau de l'élément d'amortissement (20).

5. Installation d'injection de carburant selon l'une quelconque des revendications 1 à 4, **caractérisée en ce qu'**une autre enveloppe métallique (36) est agencée et surmoulée dans la première demi-coque (15), **en ce que** l'enveloppe métallique (26) et l'autre enveloppe métallique (36) de la première demi-coque (15) sont agencées en opposition l'une à l'autre par rapport à l'élément d'amortissement élastique (20), **en ce qu'**une autre enveloppe métallique est agencée et surmoulée dans la deuxième demi-coque (16) et **en ce que** l'enveloppe métallique (27) et l'autre enveloppe métallique de la deuxième demi-coque (16) sont agencées en opposition l'une à l'autre par rapport à l'élément d'amortissement élastique (22).

6. Installation d'injection de carburant selon l'une quelconque des revendications précédentes, **caractérisée en ce que** la première demi-coque (15) et la deuxième demi-coque (16) sont reliées entre elles au moyen d'une charnière à film (28).
